# EUROPÄISCHE PATENTSCHRIFT

(11) **EP 2 979 338 B1**
(45) Veröffentlichungstag und Bekanntmachung des Hinweises auf die Patenterteilung: **19.07.2017**
(21) Anmeldenummer: 14720933.2
(22) Anmeldetag: 22.04.2014
(51) Int. Cl.: H02B 13/025, H02B 1/56

(54) **BEGRENSTER DRUCKENTLASTUNGSKLAPPE FÜR ELEKTRISCHE ANLAGE, INSBESONDERE MITTELSPANNUNGSSCHALTANLAGE**
LIMITED PRESSURE-RELIEF VALVE FOR AN ELECTRICAL ASSEMBLY, IN PARTICULAR A MEDIUM-VOLTAGE SWITCHGEAR ASSEMBLY
CLAPET DE DÉCHARGE DE PRESSION LIMITÉ POUR INSTALLATION ÉLECTRIQUE, EN PARTICULIER INSTALLATION DE DISTRIBUTION ÉLECTRIQUE MOYENNE TENSION

(30) Priorität: 14.05.2013 DE 102013208831
(43) Veröffentlichungstag der Anmeldung: 03.02.2016
(73) Patentinhaber: Siemens Aktiengesellschaft, 80333 München (DE)
(72) Erfinder: KARADENIZ, Tahsin, 34860 Istanbul (TR); SAPCI, Ahmet, 34724 Istanbul (TR); UNALAN, Ibrahim, 34840 Istanbul (TR)
(86) Internationale Anmeldenummer: PCT/EP2014/058071
(87) Internationale Veröffentlichungsnummer: WO 2014/183957

(56) Entgegenhaltungen:
- EP-A2- 1 308 973
- AT-B- 378 631
- DE-B- 1 201 448
- DE-U- 7 138 720
- JP-A- 2004 129 464

## Beschreibung

Die Erfindung betrifft eine elektrische Anlage, insbesondere Mittelspannungsschaltanlage, mit mindestens einem gekapselten Funktionsmodul und einem sich parallel zu einer Frontseite der elektrischen Anlage erstreckenden, jeweils endseitig geschlossenen Druckentlastungskanal mit mindestens einer bodenseitigen Einströmöffnung zur Verbindung des jeweiligen Funktionsmoduls mit dem Druckentlastungskanal und mindestens einer Auslassöffnung, welche mittels einer an der elektrischen Anlage oder dem Druckentlastungskanal mit einer Sollbiegestelle befestigten Ablenkplatte abgedeckt ist.

Eine derartige elektrische Anlage ist aus der EP 2109924 B1 bekannt und weist eine Ablenkplatte mit einer Sollbiegestelle zum Abdecken einer Auslassöffnung des Druckentlastungskanals der Mittelspannungsschaltanlage auf. Im Falle einer Druckbeaufschlagung durch einen in der Mittelspannungsschaltanlage auftretenden Störlichtbogen, beispielsweise im Falle eines Kurzschlusses oder dergleichen, gibt die Ablenkplatte die Auslassöffnung frei, indem sie durch die Druckbeaufschlagung entlang der Sollbiegestelle nach oben weggebogen wird, so dass heiße Gase, welche durch einen derartigen Störlichtbogen und die Druckbeaufschlagung entstehen, und die sich zunächst durch die Einströmöffnung im Druckentlastungskanal verteilen, über die Auslassöffnungen nach oben entlang der Ablenkplatte geführt aus der Mittelspannungsschaltanlage entweichen können, ohne dass insbesondere, beispielsweise Bedienungspersonal, welches vor der Schaltanlage steht, durch derartige Gasaustritte beeinträchtigt oder gefährdet werden können. Aus den Publikationen DE1201448B, DE7138720U, EP1308973A2 und ATA58482A sind bewegliche oder verbiegbare Abdeckplatten gemäß dem Oberbegriff des Anspruchs 1 bekannt. Aufgabe der vorliegenden Erfindung ist es, eine elektrische Anlage der eingangs genannten Art weiterzubilden, welche über einen kompakten, sicheren Aufbau und einfache Herstellung dieser beweglichen Abdeckplatte verfügt. Diese Aufgabe wird erfindungsgemäß gelöst durch eine Elektrische Anlage gemäß Anspruch 1. Erfindungsgemäß sind die Anschlagmittel durch bei Druckbeaufschlagung ineinandergreifende U-förmige Kanten an Seitenwänden der Ablenkplatte sowie weitere U-förmige Kanten von Begrenzungswänden der Auslassöffnung gebildet. Derartige U-förmige Kanten an Seitenwänden der Ablenkplatte und an Begrenzungswänden der Auslassöffnung bilden besonders kostengünstige und einfache Anschlagmittel, wobei bei Druckbeaufschlagung und Verbiegen der Ablenkplatte entlang der Sollbiegestelle die U-förmigen Kanten der Seitenwände der Ablenkplatte in die U-förmigen Kanten der Begrenzungswände eingreifen, so dass mit anderen Worten ein Einhaken der Ablenkplatte in den U-förmigen Kanten der Begrenzungswände der Auslassöffnung realisiert ist, welches zu einem Anschlag und damit zu einer Begrenzung der Größe der Auslassöffnung führt und gleichzeitig durch die Begrenzung der Biegung der Ablenkplatte entlang ihrer Sollbiegestelle zu einer Festlegung der Auslassrichtung für die heißen Gase aus dem Druckentlastungskanal führt.

In einer weiteren vorteilhaften Ausgestaltung der Erfindung greifen die U-förmigen Kanten der Seiten- und der Begrenzungswände im geschlossenen Zustand der Auslassöffnung zumindest teilweise ineinander. Bei einer derartigen Realisierung von auch im geschlossenen Zustand der Auslassöffnung bereits teilweise ineinandergreifenden U-förmigen Kanten der Seitenwände der Ablenkplatte und der Begrenzungswände der Auslassöffnung ist eine sichere Führung der Teile zueinander gewährleistet, so dass im Falle einer Druckbeaufschlagung auch eine sichere Festlegung der Größe der Auslassöffnung wie auch der Auslassrichtung erreichbar ist.

In einer weiteren vorteilhaften Ausgestaltung der Erfindung erstreckt sich eine Frontbegrenzungswand der Auslassöffnung unter einem Winkel von mindestens 30° gegenüber einer oberen Abdeckung des Druckentlastungskanals nach oben. Durch eine derartig sich nach oben erstreckende Frontbegrenzungswand der Auslassöffnung ist ebenfalls in einfacher Weise eine zusätzliche Gasstromführung im Falle der Druckbeaufschlagung und des Austritts von heißen Gasen nach oben realisiert.

Die Erfindung wird im Folgenden anhand der Zeichnung und eines Ausführungsbeispiels mit Bezug auf die beiliegenden Figuren näher erläutert. Es zeigen:
- Figur 1:: Ein Ausführungsbeispiel einer erfindungsgemäßen elektrischen Anlage mit einer geschlossenen Auslassöffnung;
- Figur 2:: eine Detailansicht des Ausführungsbeispiels der erfindungsgemäßen elektrischen Anlage;
- Figur 3:: eine weitere Detailansicht des Ausführungsbeispiels der erfindungsgemäßen Anlage; und
- Figur 4:: das Ausführungsbeispiel der elektrischen Anlage der Figur 1 mit geöffneter Auslassöffnung.

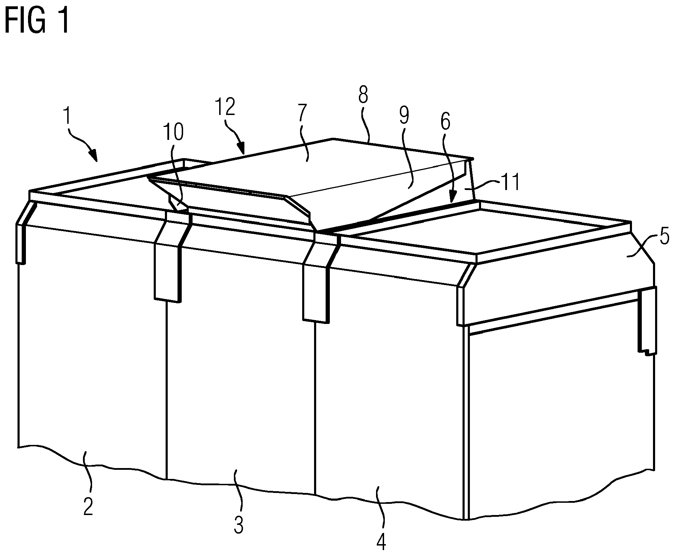

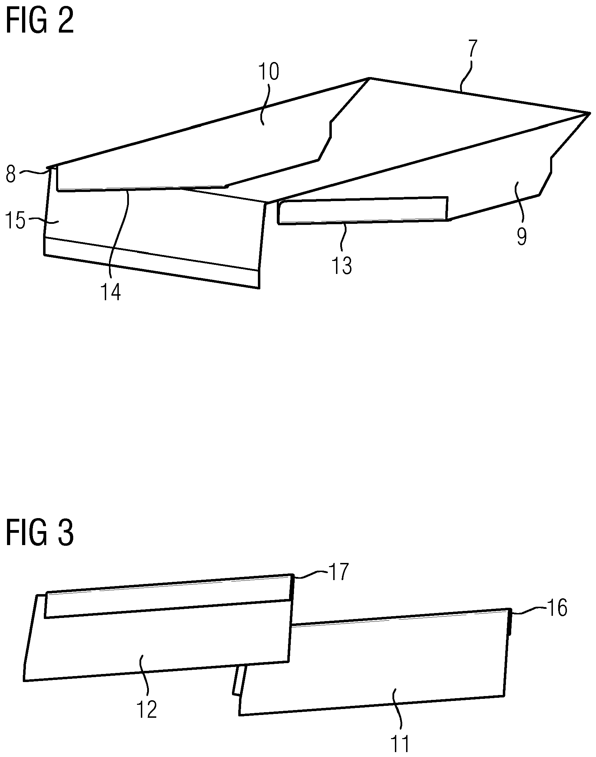

Figur 1 zeigt eine elektrische Anlage 1 mit Funktionsmodulen 2, 3 und 4 in Form von Schalterfeldern einer luftisolierten Mittelspannungsschaltanlage. Die Funktionsmodule 2, 3 und 4 sind dabei als Schalterfelder der Mittelspannungsschaltanlage ausgebildet und weisen beispielsweise figürlich nicht weiter dargestellte Anschlussräume für Kabelanschlüsse, Schalterräume für Leistungsschalter oder Lastschalter oder dergleichen sowie Sammelschienenräume auf. Parallel zu einer Frontseite der elektrischen Anlage erstreckt sich oben im Ausführungsbeispiel ein jeweils endseitig geschlossener Druckentlastungskanal 5, welcher über eine figürlich nicht weiter ersichtliche bodenseitige Einströmöffnung verfügt, durch die die Funktionsmodule 2, 3, 4 mit dem Druckentlastungskanal 5 verbunden sind, um im Falle einer bei einem in der elektrischen Anlage 1 auftretenden Störlichtbogen stattfindenden Druckbeaufschlagung die dabei entstehenden heißen Gase über die Einströmöffnung im Druckentlastungskanal 5 zu verteilen. Der Druckentlastungskanal 5 weist mindestens eine Auslassöffnung 6 auf, welche mittels einer Ablenkplatte 7 abgedeckt ist. Die Ablenkplatte 7 ist dabei mittels einer Sollbiegestelle 8 am Druckentlastungskanal 5 befestigt, so dass die Ablenkplatte 7 im Falle einer Druckbeaufschlagung aus der elektrischen Anlage 1 und den austretenden Gasen, welche sich im Druckentlastungskanal 5 zunächst verteilen, durch die Druckbeaufschlagung nach oben gebogen wird und die Auslassöffnung freigibt, wie mit Bezug auf die Figuren 1 bis 4 im Folgenden näher erläutert. Die Ablenkplatte 7 verfügt über Seitenwände 9 und 10, die Auslassöffnung 6 weist seitliche Begrenzungswände 11 und 12 auf, wobei an den Seitenwänden 9 und 10 der Ablenkplatte 7 sowie an den seitlichen Begrenzungswänden 11 und 12 der Auslassöffnung 6 U-förmige Kanten vorgesehen sind, durch die Anschlagmittel 8 gebildet sind, durch die eine Größe der Auslassöffnung sowie eine Auslassrichtung für die bei Druckbeaufschlagung entstehenden heißen Gase festgelegt sind, wie mit Bezug auf die Figuren 2 bis 4 ausgeführt wird.

Figur 2 zeigt die Ablenkplatte 7 mit den Seitenwänden 9 und 10, welche U-förmige Kanten 13 bzw. 14 aufweisen, derart, dass die U-förmigen Kanten 13 und 14 durch Umbiegen der Seitenwände 9 bzw. 10 nach innen gebildet sind. Eine hintere Begrenzungswand 15 ist zur Befestigung der Ablenkplatte 7 am Druckentlastungskanal 5 vorgesehen, wobei zwischen der hinteren Begrenzungswand 15 und der Ablenkplatte 7 die Sollbiegestelle 8 vorgesehen ist.

Figur 3 zeigt die seitlichen Begrenzungswände 11 und 12 der Auslassöffnung 6 in einer Detailansicht, welche weitere U-förmige Kanten 16 bzw. 17 aufweisen, die derart ausgebildet sind, dass sich die seitlichen Begrenzungswände 11 bzw. 12 nach außen umgebogen sind. Die seitlichen Begrenzungswände 11 bzw. 12 sind dabei am Druckentlastungskanal 5 an der Auslassöffnung 6 derart befestigt, dass die Seitenwände 9 bzw. 10 der Ablenkplatte 7 außerhalb der seitlichen Begrenzungswände 11 bzw. 12 der Auslassöffnung 6 befinden, wobei im mit Bezug auf die Figur 1 beschriebenen geschlossenen Zustand der Auslassöffnung 6 bei geschlossener Ablenkplatte 7 die U-förmigen Kanten 13 bzw. 14 zumindest teilweise bereits in die U-förmigen Kanten 16 bzw. 17 der seitlichen Begrenzungswände 11 bzw. 12 eingreifen, so dass eine sichere Führung der Ablenkplatte 7 entlang der seitlichen Begrenzungswände 11 bzw. 12 durch die zumindest teilweise ineinander greifenden U-förmigen Kanten 13 bzw. 14 und 16 bzw. 17 gewährleistet ist.

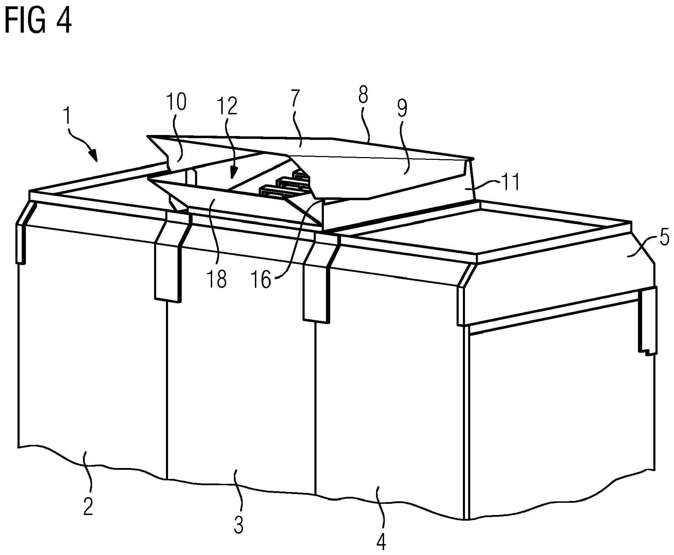

Figur 4 zeigt die elektrische Anlage 1 mit geöffneter Auslassöffnung 6 nach Druckbeaufschlagung durch einen Störlichtbogen im Inneren der elektrischen Anlage 1, wobei sich durch die Druckbeaufschlagung nach Verteilung der heißen Gase im Druckentlastungskanal 5 die Ablenkplatte 7 entlang der Sollbiegestelle 8 nach oben gebogen hat, bis durch die Anschlagmittel in Form der ineinandergreifenden U-förmigen Kanten 13 und 14 bzw. 16 und 17 eine Begrenzung der Biegebewegung der Ablenkplatte 7 nach oben stattfindet und damit eine Größe der Auslassöffnung sowie eine Auslassrichtung festgelegt sind, weil sich die Ablenkplatte 7 nicht über die durch die Anschlagmittel festgelegte Position der Figur 4 nach oben beigen kann, so dass heiße Gase gerichtet nach oben und nach vorne aus dem Druckentlastungskanal 5 und der Auslassöffnung 6 gerichtet geführt sind und insbesondere eine Gefährdung von vor der Schaltanlage befindlichem Bedienpersonal wirksam verhindert wird. In der Figur 4 ebenfalls erkennbar ist eine Frontbegrenzungswand 18 der Auslassöffnung 6, welche sich gegenüber einer horizontalen Abdeckung 19 des Druckentlastungskanals 5 unter einem Winkel nach oben erstreckt, welcher mindestens 30° beträgt, so dass durch die Frontbegrenzungswand 18 eine zusätzliche Führung des Gasstromes nach vorne oben bezüglich der Schaltanlage gewährleistet ist, und durch die Frontbegrenzungswand 18 und die Anschlagmittel in ihrer Biegung begrenzte Ablenkplatte 7 eine Gasstromführung schräg nach vorne oben aus der Auslassöffnung 6 festgelegt und bestimmt ist, welche eine Gefährdung von im vorderen Bereich der Schaltanlage befindlichem Bedienpersonal wirksam verhindert und gleichzeitig den Raumbedarf der Schaltanlage oberhalb des Druckentlastungskanals 5 reduziert.

### Bezugszeichenliste

- 1: elektrische Anlage
- 2, 3, 4: Funktionsmodule
- 5: Druckentlastungskanal
- 6: Auslassöffnung
- 7: Ablenkplatte
- 8: Sollbiegestelle
- 9, 10: Seitenwände
- 11, 12: Begrenzungswände
- 13, 14: U-förmige Kanten
- 15: hintere Begrenzungswand
- 16, 17: U-förmige Kanten
- 18: Frontbegrenzungswand
- 19: obere Abdeckung

## Patentansprüche

1. Elektrische Anlage (1), insbesondere Mittelspannungsschaltanlage, mit mindestens einem gekapselten Funktionsmodul (2, 3, 4) und einem sich parallel zu einer Frontseite der elektrischen Anlage (1) erstreckenden, jeweils endseitig geschlossenen Druckentlastungskanal (5) mit mindestens einer bodenseitigen Einströmöffnung zur Verbindung des jeweiligen Funktionsmoduls (2, 3, 4) mit dem Druckentlastungskanal (5) und mindestens einer Auslassöffnung (6), welche mittels einer an der elektrischen Anlage (1) oder dem Druckentlastungskanal (5) mit einer Sollbiegestelle befestigten Ablenkplatte (7) abgedeckt ist, wobei Anschlagmittel vorgesehen sind, durch welche eine Auslassrichtung festgelegt und eine Größe der Auslassöffnung (6) bestimmt ist,
**dadurch gekennzeichnet**, d a s s die Anschlagmittel durch bei Druckbeaufschlagung ineinandergreifende U-förmige Kanten (13, 14) an Seitenwänden (9, 10) der Ablenkplatte (7) sowie weitere U-förmige Kanten (16, 17) von Begrenzungswänden (11, 12) der Auslassöffnung (6) gebildet sind.

2. Elektrische Anlage (1) nach Anspruch 1,
**dadurch gekennzeichnet, dass** die U-förmigen Kanten (13, 14, 16, 17) der Seitenwände (9, 10) und der Begrenzungswände (11, 12) im geschlossenen Zustand der Auslassöffnung (6) zumindest teilweise ineinander greifen.

3. Elektrische Anlage (1) nach einem der vorangehenden Ansprüche,
**dadurch gekennzeichnet, dass** sich eine Frontbegrenzungswand (18) der Auslassöffnung (6) unter einem Winkel von mindestens 30° gegenüber einer oberen Abdeckung (19) des Druckentlastungskanals (5) nach oben erstreckt.

## Claims

1. Electrical assembly (1), in particular medium-voltage switchgear assembly, having at least one encapsulated functional module (2, 3, 4) and a pressure-relief channel (5) which extends parallel to a front face of the electrical assembly (1), is closed at each end and has at least one inflow opening at the bottom for connecting the respective functional module (2, 3, 4) to the pressure-relief channel (5) and has at least one outlet opening (6) which is covered by means of a deflector plate (7) which is fastened to the electrical assembly (1) or to the pressure-relief channel (5) by way of a predetermined bending point, wherein stop means are provided, an outlet direction being defined and a size of the outlet opening (6) being determined by way of said stop means, **characterized in that** the stop means are formed by U-shaped edges (13, 14), which engage one in the other when pressure is applied, on side walls (9, 10) of the deflector plate (7) and also further U-shaped edges (16, 17) of boundary walls (11, 12) of the outlet opening (6).

2. Electrical assembly (1) according to Claim 1, **characterized in that** the U-shaped edges (13, 14, 16, 17) of the side walls (9, 10) and of the boundary walls (11, 12) engage at least partially one in the other in the closed state of the outlet opening (6).

3. Electrical assembly (1) according to one of the preceding claims, **characterized in that** a front boundary wall (18) of the outlet opening (6) extends upward at an angle of at least 30° in relation to a top cover (19) of the pressure-relief channel (5).

## Revendications

1. Installation (1) électrique, notamment installation de distribution de moyenne tension, comprenant au moins un module (2, 3, 4) fonctionnel blindé et un conduit (5) de détente de la pression, s'étendant parallèlement à un côté avant de l'installation (1) électrique, fermé du côté de l'extrémité, et ayant au moins une ouverture d'entrée du côté du fond, pour relier le module (2, 3, 4) fonctionnel au conduit (5) de détente de la pression et au moins une ouverture (6) de sortie, qui est recouverte, au moyen d'une plaque (7) de déviation fixée, par un point destiné à se plier, à l'installation (1) électrique ou au conduit (5) de détente de la pression, dans lequel il est prévu des moyens de butée par lesquels une direction de sortie est fixée et une dimension de l'ouverture (6) de sortie est déterminée, **caractérisée en ce que**
les moyens de butée sont formés par des bords (13, 14) en forme de U, se prenant l'un dans l'autre lors de l'alimentation en pression, des parois (9, 10) latérales de la plaque (7) de déviation ainsi que d'autres bords (16, 17) en forme de U de parois (11, 12) de délimitation de l'ouverture (6) de sortie.

2. Installation (1) électrique suivant la revendication 1, **caractérisée en ce que**
les bords (13, 14, 15, 16, 17) en forme de U des parois (9, 10) latérales et des parois (11, 12) de délimitation, se prennent l'un dans l'autre, au moins en partie, à l'état fermé de l'ouverture (6) de sortie.

3. Installation (1) électrique suivant l'une des revendications précédentes,
**caractérisée en ce qu'**
une paroi (18) de délimitation avant de l'ouverture (6) de sortie s'étend vers le haut en faisant un angle d'au moins 30° avec une couverture (19) supérieure du conduit (5) de détente de la pression.
